# EUROPEAN PATENT APPLICATION

(11) **EP 4 700 533 A1**
(43) Date of publication of application: **25.02.2026**
(21) Application number: 24845790.5
(22) Date of filing: 05.06.2024
(51) Int. Cl.: G06F 1/16, F16M 11/22, H04N 5/64

(54) **STAND FOR DISPLAY**

(30) Priority: 21.07.2023 KR 20230095623
(71) Applicant: Samsung Electronics Co., Ltd., Suwon-si, Gyeonggi-do 16677 (KR)
(72) Inventor: KIM, Minchul, Suwon-si Gyeonggi-do 16677 (KR); SHIN, Jinyoung, Suwon-si Gyeonggi-do 16677 (KR)
(74) Representative: Appleyard Lees IP LLP
(86) International application number: PCT/KR2024/007717
(87) International publication number: WO 2025/023486

(57) **Abstract**

A stand for supporting a display is disclosed. The stand comprises: a base having a plurality of connection protrusions; a support having a mounting portion connected to a display, and a plurality of connection holes into which each of the plurality of connection protrusions are configured to be inserted so as to be removable therefrom; and a lever unit provided in the support and elastically fixed to the base.

## Description

### [Technical Field]

This disclosure relates to a stand for a display, which supports a display.

### [Background Art]

Ordinarily, a display, as a device displaying a screen, includes a monitor or a television. For the display device, a self-light emitting display panel such as an organic light emitting diode or a micro light emitting diode, and a light receiving and emitting display panel such as a liquid crystal display panel are used. The display may be supported by a stand such that the height of a screen is at a high position from the ground surface.

### [Disclosure of Invention]

### [Solution to Problem]

A stand for a display according to one or more embodiments may include: a base provided with a plurality of connection protrusions, a mounting portion connected to the display, and a support comprising a plurality of connection holes into which the plurality of connection protrusions are configured to be inserted respectively in a separable manner, and a lever unit provided at the supporter and elastically fixed to the base.

The plurality of connection protrusions may respectively include a pillar portion protruding from an upper surface of the base, and a head portion disposed at an upper end of the pillar portion and having a diameter greater than a diameter of the pillar portion.

The plurality of connection holes may respectively include a first region having a width greater than a diameter of a head portion of the connection protrusion, and a second region having a width less than a diameter of a head portion of the connection protrusion and greater than or equal to a diameter of a pillar portion of the connection protrusion.

The plurality of connection holes may be disposed along an identical direction.

The base may be provided with at least one support protrusion.

The lever unit may include a bracket fixed to the base, the lever of which includes a rear end hinge-connected to the bracket, and an elastic wire including a rear end hinge-connected to the lever, while a front end is in contact with the at least one support protrusion in a state where the front end is pressed against the at least one support protrusion.

The elastic wire may be shaped into a loop surrounding a front end of the lever at a distance.

The elastic wire may be provided, at a front end thereof, with at least one coupling portion formed concavely to surround part of the at least one support protrusion.

The at least one support protrusion may include a pillar portion protruding from an upper surface of the base, and a head portion disposed at an upper end of the pillar portion and having a diameter greater than a diameter of the pillar portion.

At least one additional connection hole provided at the support may include a third region having a width greater than a diameter of a head portion of the support protrusion, and a fourth region having a width less than a diameter of a head portion of the support protrusion and greater than or equal to a diameter of a pillar portion of the support protrusion.

The bracket may be provided with at least one lock protrusion. The lever may be provided with at least one lock hole coupled to the at least one lock protrusion in a separable manner.

The support may be formed to be inclined such that the mounting portion is placed toward a front of the base. A mounting region in which a lower portion of the supporter is mounted may be placed at a rear of the base.

The plurality of connection protrusions may include a bolt fastened to the base in a separable manner.

The at least one support protrusion may include a bolt fastened to the base in a separable manner.

The plurality of connection protrusions may include a first connection protrusion and a second connection protrusion spaced from a rear end of the base, and a third connection protrusion and a fourth connection protrusion adjacent to a rear end of the base and closer than the first connection protrusion and the second connection protrusion.

The lever unit may be at a position surrounded by the first, second, third and fourth connection protrusions.

A stand for a display according to an example embodiment may include: a base, a support having a lower portion mounted in a mounting region provided at the base in a separable manner while an upper portion is connected with the display, and a lever unit including a lever configured to be rotated in a first direction and a second direction opposite to the first direction and an elastic wire hinge-connected to the lever.

The lever may be configured to be rotated in the first direction to press a front end of the elastic wire against part of the base elastically and fix the support to the base, and configured to be rotated in the second direction to space a front end of the elastic wire from part of the base.

The base may be provided, in a mounting region thereof, with a plurality of connection protrusions, and the support may be provided, in a lower portion thereof, with a plurality of connection holes into which the plurality of connection protrusions are configured to be inserted respectively in a separable manner.

### [Brief Description of Drawings]

FIG. 1 is a perspective view illustrating an example of a stand for a display, to which a display is coupled according to various embodiments;
FIG. 2 is an exploded perspective view illustrating a stand for a display according to various embodiments;
FIG. 3 is a perspective view illustrating a supporter of a stand for a display according to various embodiments;
FIG. 4 is a perspective view illustrating a lever unit provided at a supporter of a stand for a display according to various embodiments;
FIG. 5 is a perspective view illustrating a stand for a display according to various embodiments;
FIG. 6 is an enlarged perspective view illustrating portion A shown in FIG. 5, and illustrating a first mounting step of mounting a supporter on a base according to various embodiments;
FIG. 7 is a partial perspective view illustrating a second mounting step of mounting a supporter on a base according to various embodiments;
FIGS. 8 and 9 are cross-sectional views illustrating a third mounting step of mounting a supporter on a base by a lever unit of a stand for a display according to various embodiments;
FIG. 10 is a partial perspective view illustrating an example of an elastic wire of a lever unit elastically fixed to a pair of fixation protrusions provided on a base according to various embodiments;
FIG. 11 is a diagram illustrating a lock state of a lever unit according to various embodiments; and
FIG. 12 is a diagram illustrating a lever unit according to various embodiments.

### [Mode for Invention]

The various example embodiments described in the present disclosure and the configurations illustrated in the drawings are provided as examples, and at a time of filing of the disclosure, there may be various modifications replaceable with the various embodiments and the drawings in the disclosure.

In the disclosure, like reference numerals or symbols in each of the drawings substantially indicate like components or elements performing like functions.

Terms used herein are to describe the various embodiments, and are not intended to limit and/or restrict the subject matter of the disclosure. Unless explicitly stated otherwise, singular forms may include plural forms as well. In the disclosure, terms such as "include," or "have" and the like are used to indicate the presence of stated features, numbers, steps, operations, elements, components or a combination thereof, and do not imply exclusion of the presence or addition of one or more different features, numbers, steps, operations, elements, components or a combination thereof.

In the disclosure, terms including ordinal numbers such as "1^{st}," "2^{nd}," and the like may be used to describe various elements, but not to limit the elements. The terms are merely used to differentiate one element from another. For example, a first element may be referred to as a second element, and similarly, a second element may be referred to as a first element without departing from the scope of the right to the subject matter of the disclosure. The term "and/or" includes a combination of a plurality of stated relevant elements or any one of the plurality of stated relevant elements.

In the disclosure, terms such as "front end," "rear end," "upper portion," "lower portion," "front surface," "rear surface," "upper surface," "lower surface," "upper end," "lower end," "one end,' "the other end," "left side," "right side," and the like are defined with respect to the drawings, and are not intended to limit the shape and position of each of the elements.

Hereafter, a stand for a display according to various example embodiments is described in greater detail with reference to the accompanying drawings.

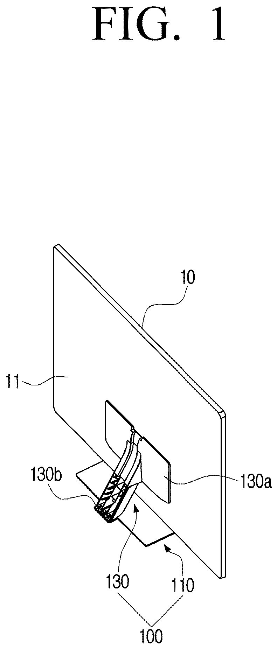

FIG. 1 is a perspective view illustrating an example of a stand for a display, to which a display is coupled according to various embodiments.

Referring to FIG. 1, a stand for a display 100 may include a base 110, a support130 connected to the base 110 in a way that the supporter 130 is separable from the base 110 without fasteners such as a screw and a bolt, and a lever unit 150 provided in a lower portion 130b of the supporter 130. The supporter 130 may be coupled to a rear surface 11 of a display 10 through a coupling portion 130a that is provided in one end portion of the supporter 130.

The base 110 may be shaped into a plate having a predetermined area to distribute the weight of the supporter 130 and the display 10 and support the display 10 reliably.

When the supporter 130 is mounted on the base 110, the supporter 130 may be disposed in the way that the coupling portion 130a of the supporter 130 is inclined toward the front of the base 110. In this case, a mounting region 110a of the base 110, in which the supporter 130 is mounted, may be provided at the rear of the base 110 such that the center of gravity of the display 10 mounted on the supporter 130 is not eccentric to the front or rear of the base 110. Accordingly, the display 10 supported by the stand 100 may not fall down.

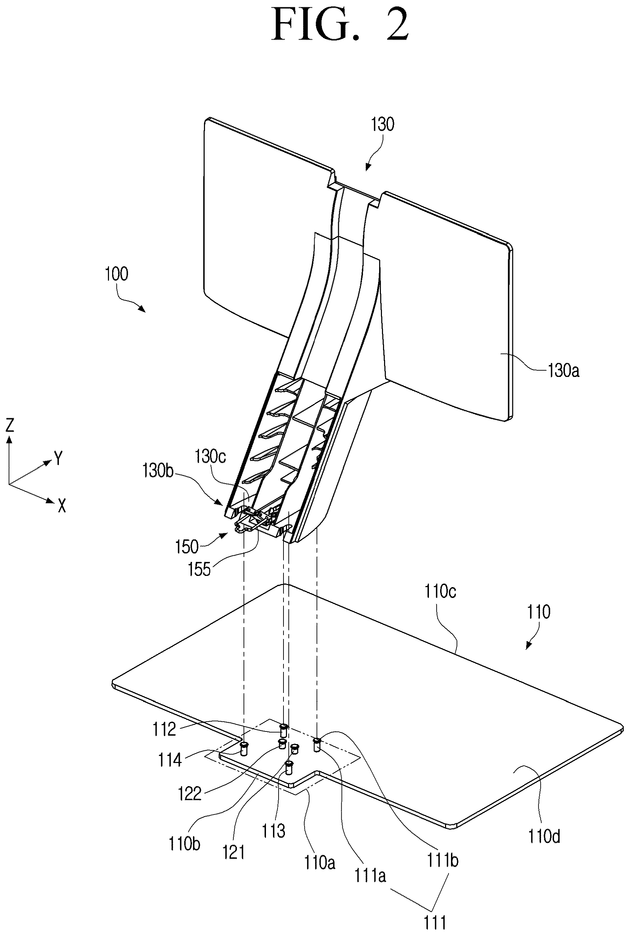

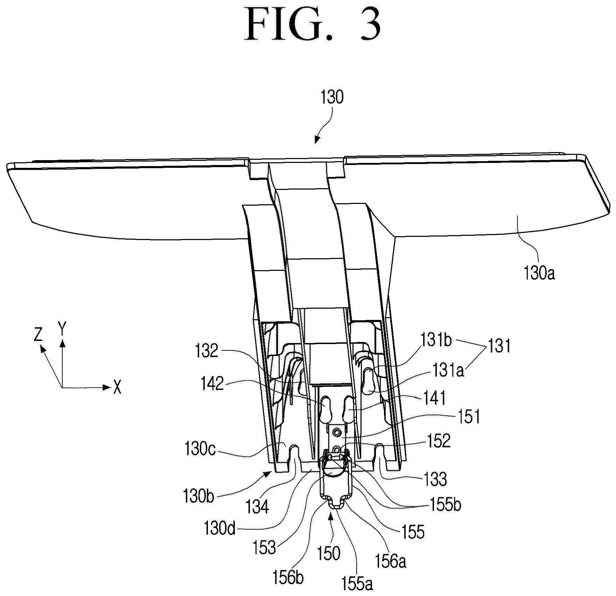

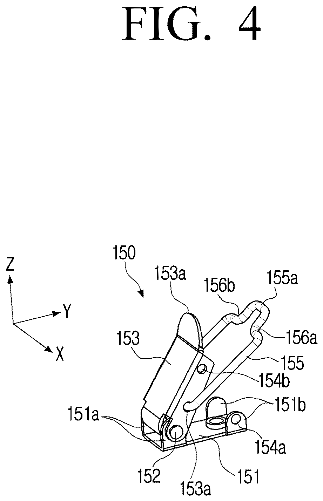

FIG. 2 is an exploded perspective view illustrating a stand for a display according to various embodiments. FIG. 3 is a perspective view illustrating a supporter of a stand for a display according to various embodiments. FIG. 4 is a perspective view illustrating a lever unit provided at a supporter of a stand for a display according to various embodiments.

Referring to FIG. 2, a plurality of connection protrusions 111, 112, 113, 114 may be provided in the mounting region 110a of the base 110. The plurality of connection protrusions 111, 112, 113, 114 may include a first connection protrusion 111 and a second connection protrusion 112 that are spaced from a rear end 110b of the base 110 toward a front end 110c of the base 110, and a third connection protrusion 113 and a fourth connection protrusion 114 that are adjacent to the rear end 110b of the base 110.

The first and third connection protrusions 111, 113 may be provided on the right side of the base 110 with respect to a centerline of the base 110 (hereafter, referred to as "base centerline"), which is parallel to the Y axis. The second and fourth connection protrusions 112, 114 may be provided on the left side of the base 110 with respect to the base centerline. In this case, the second and fourth connection protrusions 112, 114 may be provided to be symmetrical with respect to the first and third connection protrusions 111, 113. The first, second, third and fourth connection protrusions 111, 112, 113, 114 may protrude from an upper surface 110d of the base 110 by a predetermine height.

The first connection protrusion 111 may include a pillar portion 111a and a head portion 111b that is provided at the upper end of the pillar portion 111a and has a diameter greater than a diameter of the pillar portion 111a. Like the first connection protrusion 111, the second, third and fourth connection protrusions 112, 113, 114 may include a pillar portion and a head portion that is provided at the upper end of the pillar portion and has a diameter greater than a diameter of the pillar portion, respectively.

In the case where the lower portion 130b of the supporter 130 is completely mounted in the mounting region 110a of the base 110, the first, second, third and fourth connection protrusions 111, 112, 113, 114 may prevent the lower portion 130b of the supporter 130 from being separated from the base 110. For example, as the supporter 130 is pulled in one direction (e.g., a Z-axis direction) to separate the lower portion 130b of the supporter 130 from the base 110 in the state where the lower portion 130b of the supporter 130 is completely mounted in the mounting region 110a of the base 110, an upper surface 130c of the lower portion 130b of the supporter 130 is interfered with by each of the head portions of the first, second, third and fourth connection protrusions 111, 112, 113, 114. Accordingly, the supporter 130 may not be separated from the base 110.

The first, second, third and fourth connection protrusions 111, 112, 113, 114 may be a bolt (e.g., a stud bolt, a hex bolt, a round head bolt, a flat head bolt, a hex wrench bolt, a round head wrench bolt, a flat head wrench bolt, a flange bolt and the like that have a head portion) fastened to the base 110 in a separable manner.

In the disclosure, as for the plurality of connection protrusions 111, 112, 113, 114, four connection protrusions are provided on the base 110, but the number of the plurality of connection protrusions is not limited thereto. For example, two or more connection protrusions may be provided as for the plurality of connection protrusions. One of the two connection protrusions may be provided on the left side of the base 110, while the other may be provided on the right side of the base 110. In this case, one of the two connection protrusions may be placed to be adjacent to the rear end 110b of the base 110, while the other may be placed to be spaced from the rear end 110b of the base 110. Alternatively, as for the plurality of connection protrusions, three connection protrusions may be provided on the left side and the right side of the base 110 respectively in the way that the three connection protrusions on the left side of the base 110 are symmetrical to the three connection protrusions on the right side of the base with respect to the baseline.

In the mounting region 110a of the base 110, a first support protrusion 121 and a second support protrusion 122 may be provided. An elastic wire 155 of the lever unit 150 may be elastically supported against the first and second support protrusions 121, 122. The first and second support protrusions 121, 122 may be disposed among the first, second, third and fourth connection protrusions 111, 112, 113, 114. For example, the first support protrusion 121 may be disposed between the first and third connection protrusions 111, 113 and the base centerline, while the second support protrusion 122 may be disposed between the second and fourth connection protrusions 112, 114 and the base centerline.

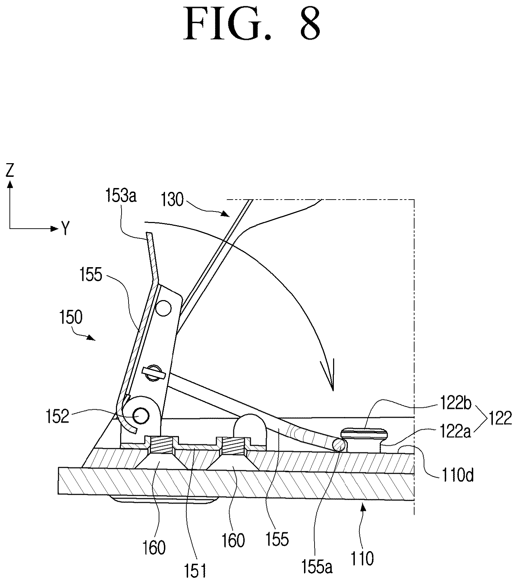

The first and second support protrusions 121, 122 may protrude from the upper surface 110d of the base 110 by a predetermined height. Like the first, second, third and fourth connection protrusions 111, 112, 113, 114, the first and second support protrusions 121, 122 respectively may have a pillar portion 122a (see FIG. 8) and a head portion 122b (see FIG. 8) that is provided at the upper end of the pillar portion 122a and has a diameter greater than a diameter of the pillar portion 122a. The elastic wire 155 of the lever unit 150 may be elastically supported against the pillar portion 122a. The head portion 122b may interfere with the elastic wire 155 elastically supported against the pillar portion 122a and prevent the elastic wire 155 from being separated from the first and second support protrusions 121, 122.

Like the first, second, third and fourth connection protrusions 111, 112, 113, 114, the first and second support protrusions 121, 122 may be a bolt (e.g., a stud bolt, a hex bolt, a round head bolt, a flat head bolt, a hex wrench bolt, a round head wrench bolt, a flat head wrench bolt, a flange bolt and the like that have a head portion) fastened to the base 110 in a separable manner.

Referring to FIG. 3, the support 130 may be provided, in the lower portion 130b thereof, with first, second, third and fourth connection holes 131, 132, 133, 134 to which the first, second, third and fourth connection protrusions 111, 112, 113, 114 are coupled respectively in a separable manner. For example, a first connection hole 131 may correspond to the first connection protrusion 111, a second connection hole 132 may correspond to the second connection protrusion 112, a third connection hole 133 may correspond to the third connection protrusion 113, and a fourth connection hole 134 may correspond to the fourth connection protrusion 114.

The first connection hole 131 may include a first region 131a having a width greater than the diameter of the head portion 111b of the first connection protrusion 111, and a second region 131b having a width greater than or equal to the diameter of the pillar portion 111a of the first connection protrusion 111 and less than the diameter of the head portion 111b of the first connection protrusion 111. The first region 131a of the first connection hole 131 may be a portion through which the first connection protrusion 111 is inserted into the first connection hole 131 or a portion through which the first connection protrusion 111 is withdrawn from the first connection hole 131. The pillar portion 111a of the first connection protrusion 111 may be inserted into the second region 131b of the first connection hole 131.

Like the first connection hole 131, the second, third and fourth connection holes 132, 133, 134 may have a pillar portion and a head portion that is provided at the upper end of the pillar portion and has a diameter great than a diameter of the pillar portion, respectively. Second regions of the third connection hole 133 and fourth connection hole 134 may be open respectively to a rear end 130d of the lower portion 130b of the supporter 130.

The first, second, third and fourth connection holes 131, 132, 133, 134 may all be disposed along the same direction (e.g., a Y-axis direction). In this case, the second regions of the first, second, third and fourth connection holes 131, 132, 133, 134 may be disposed closer to the rear end 130d of the lower portion 130b of the supporter 130 than the first regions thereof.

As the lower portion 130b of the supporter 130 is pulled in a direction (e.g., a Z-axis direction) where the lower portion 130b of the supporter 130 is spaced from the base 110 in the state where each of the pillar portions of the first, second, third and fourth connection protrusions 111, 112, 113, 114 is placed in each of the second regions of the first, second, third and fourth connection holes 131, 132, 133, 134, the upper surface 130c of the lower portion 130b of the supporter 130 may be interfered with by each of the head portions of the first, second, third and fourth connection protrusions 111, 112, 113, 114 such that the supporter 130 is not separated from the base 110.

The supporter 130 may be provided, in the lower portion 130b thereof, with fifth and sixth connection holes 141, 142 to which the first and second support protrusions 121, 122 are coupled respectively in a separable manner. For example, the fifth connection hole 141 may correspond to the first support protrusion 121, while the sixth connection hole 142 may correspond to the second support protrusion 122.

Like the first connection hole 131, the fifth and sixth connection holes 141, 142 may include a first region and a second region respectively. The first region of the fifth connection hole 141 may have a width greater than the diameter of the head portion of the first support protrusion 121, and the second region of the fifth connection hole 141 may have a width greater than or equal to the diameter of the pillar portion of the first support protrusion 121 and less than the diameter of the head portion 111b of the first support protrusion 121. The first region of the sixth connection hole 142 may have a width greater than the diameter of the head portion 122b (see FIG. 8) of the second support protrusion 122, and the second region of the sixth connection hole 142 may have a width greater than or equal to the diameter of the pillar portion 122a of the second support protrusion 122 and less than the diameter of the head portion 122b (see FIG. 8) of the second support protrusion 122.

In the disclosure, the first, second, third, fourth, fifth and sixth connection holes 131, 132, 133, 134, 141, 142 may all have the same shape and size.

Referring to FIGS. 3 and 4, the lever unit 150 may include a bracket 151 fixed to the lower portion 130b of the supporter 130, a lever 153 of which one end is hinge-connected to the bracket 151, and an elastic wire 155 of which one end is hinge-connected to the lever 153.

The bracket 151 may be fixed to the upper surface 130d of the lower portion 130b of the supporter 130 by a plurality of screws 160 (see FIG. 8). A pair of first ribs 151a to which the lever 153 is hinge-connected may be formed on one side of the bracket 151 in an elongated manner. A pair of second ribs 151b provided with a pair of lock protrusions 154a may be formed on the other side of the bracket 151 in an elongated manner.

One side of the lever 153 may be hinge-connected to the first ribs 151a of the bracket 151 by a hinge pin 152. The lever 153 may be rotated around the X axis in a direction adjacent to the base 110 (hereafter, referred to as a first direction) and press the elastic wire 155 in the state where the elastic wire 155 is pressed against the first and second support protrusions 121, 122. The lever 153 may be rotated in a second direction opposite to the first direction in the state where the lever 153 presses the elastic wire 155 against the first and second support protrusions 121, 122 to release the elastic wire 155 from the press against the first and second support protrusions 121, 122.

The lever 153 may be provided, on the other side thereof, with a pair of lock holes 154b into which the pair of lock protrusions 154a provided at the pair of second ribs 151b of the bracket 151 is inserted in a separable manner. The positions of the pair of lock protrusions 154a and the positions of the pair of lock holes 154b may be set in an opposite manner. For example, in the case where the pair of lock protrusions 154a is provided on the other side of the lever 153, the pair of lock holes 154b may be provided at the pair of second ribs 151b.

As the lever 153 is rotated by a predetermined angle in the first direction, the pair of lock protrusions 154a may be coupled to the pair of lock holes 154b. In this case, the lever 153 may be fixed to the bracket 151. The elastic wire 155 may be pressed against the first and second support protrusions 121, 122 continuously by the lever 153. As the lever 153 is rotated in the second direction in the state where the lever 153 is fixed to the bracket 151 based on a coupling between the pair of lock protrusions 154a and the pair of lock holes 154b, the pair of lock protrusions 154a may be separated from the pair of lock holes 154b.

In the disclosure, the pair of lock protrusions 154a provided at the bracket 151, and the pair of lock holes 154b corresponding to the pair of lock protrusions provided at the lever 153 are described, but not limited thereto. For example, one lock protrusion may be provided at the bracket 151, and one lock hole corresponding to the one lock protrusion may be provided at the lever 153.

The elastic wire 155 may be formed of metal or synthetic resin having predetermined elasticity. A rear end 155b of the elastic wire 155 may be hingedly coupled to both sides of the lever 153 respectively, and maintain an approximate loop shape. A front end 155a of the elastic wire 155 may be at a position where the front end 155a of the elastic wire 155 protrudes further than a front end 153a of the lever 153 such that the font end 155a of the elastic wire 155 is not interfered with by the front end 153a of the lever 153.

The front end 155a of the elastic wire 155 may be fixed by the first and second support protrusions 121, 122. The elastic wire 155 may be provided with a first coupling portion 156a and a second coupling portion 156b that are concave from both sides of the front end 155a of the elastic wire 155. The first coupling portion 156a of the elastic wire 155 may press part of the pillar portion of the first support protrusion 121 while surrounding part of the pillar portion of the first support protrusion 121. The second coupling portion 156b of the elastic wire 155 may press part of the pillar portion of the second support protrusion 122 while surrounding part of the pillar portion of the second support protrusion 122.

Hereafter, an example of mounting a stand on the base of the stand for a display is described based on first-to third steps according to various embodiments, with reference to the drawings.

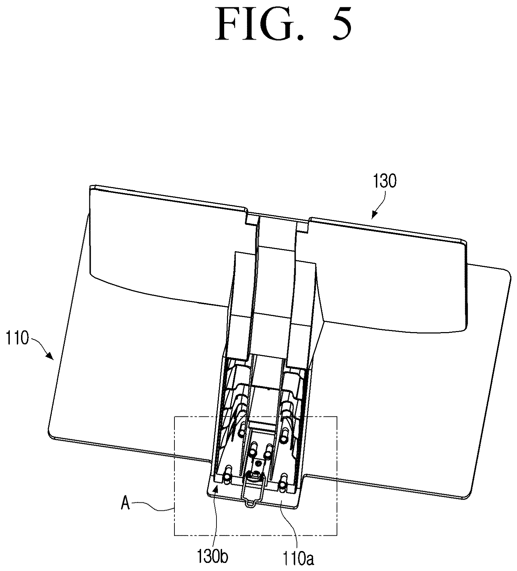

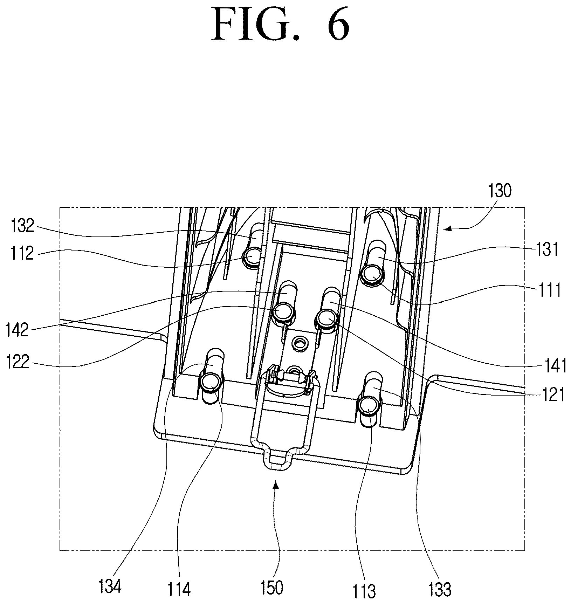

FIG. 5 is a perspective view illustrating a stand for a display according to various embodiments. FIG. 6 is an enlarged perspective view illustrating portion A shown in FIG. 5, and illustrating a first mounting step of mounting a supporter on a base according to various embodiments.

Referring to FIGS. 5 and 6, the lower portion 130b of the supporter 130 is mounted on the mounting region 110a of the base 110 such that the first, second, third and fourth connection protrusions 111, 112, 113, 114 are inserted into the first, second, third and fourth connections holes 131, 132, 133, 134 respectively. In this case, the head portions of the first, second, third and fourth connection protrusions 111, 112, 113, 114 may be inserted into the first regions of the first, second, third and fourth connection holes 131, 132, 133, 134 respectively.

The first and second support protrusions 121, 122 may be inserted into the fifth and sixth connection holes 141, 142 respectively. In this case, the head portions of the first and second support protrusions 111, 112 may be inserted into the first regions of the fifth and sixth connection holes 141, 142 respectively.

The lever 153 may be rotated in the second direction and space the front end 155a of the elastic wire 155 from the first and second support protrusions 121, 122 such that the front end 155a of the elastic wire 155 does not press the first and second support protrusions 121, 122.

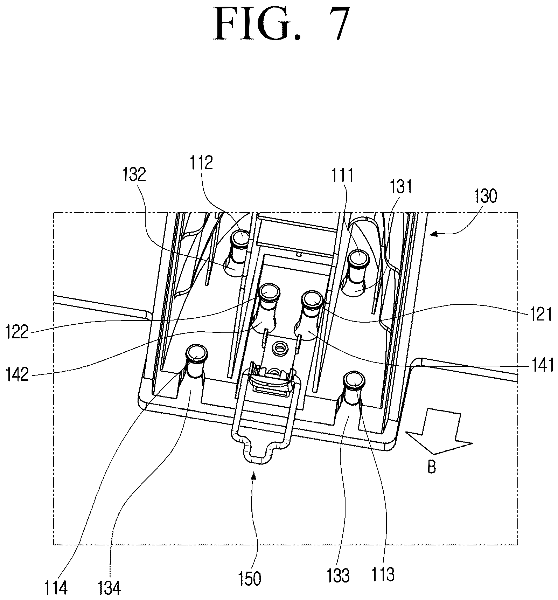

FIG. 7 is a partial perspective view illustrating a second mounting step of mounting a supporter on a base according to various embodiments.

Referring to FIG. 7, the lower portion 130b of the supporter 130 is slid in direction B along the upper surface 110d of the base 110 in the state where the lower portion 130b of the supporter 130 is mounted in the mounting region 110a of the base 110.

Each of the pillar portions of the first, second, third and fourth connection protrusions 111, 112, 113, 114 may be placed in each of the second regions of the first, second, third and fourth connection holes 131, 132, 133, 134. In this case, no gap or a very narrow gap (a gap likely to be caused by manufacturing tolerance, e.g., 1 mm or less) be substantially formed between each of the head portions of the first, second, third and fourth connection protrusions 111, 112, 113, 114 and the upper surface 110d of the base 110.

Additionally, each of the pillar portions of the first and second support protrusions 121, 122 may be placed in each of the second regions of the fifth and sixth holes 141, 142. No gap or a very narrow gap (a gap likely to be caused by manufacturing tolerance, e.g., 1 mm or less) may be substantially formed between each of the head portions of the first and second support protrusions 121, 122 and the upper surface 110d of the base 110.

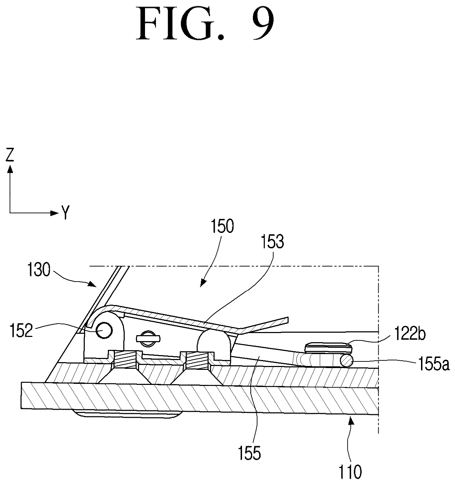

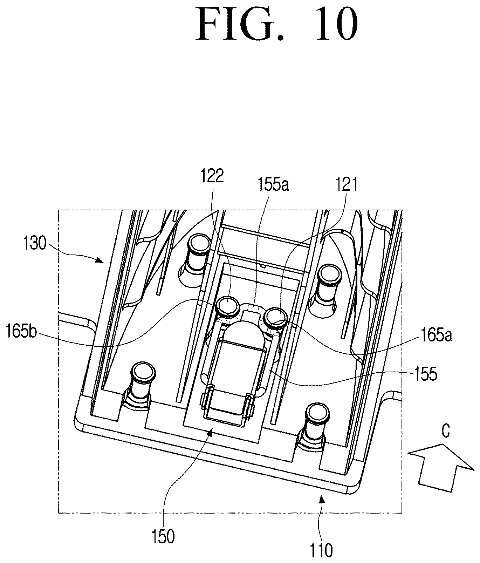

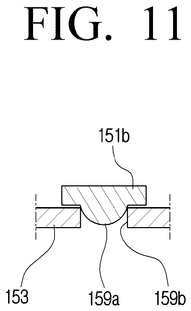

FIGS. 8 and 9 are cross-sectional views illustrating a third mounting step of mounting a supporter on a base by a lever unit of a stand for a display according to various embodiments. FIG. 10 is a partial perspective view illustrating an example of an elastic wire of a lever unit elastically fixed to a pair of fixation protrusions provided on a base according to various embodiments. FIG. 11 is a diagram illustrating a lock state of a lever unit according to various embodiments.

Referring to FIG. 8, the front end 155a of the elastic wire 155 may be disposed at a position adjacent to the first and second support protrusions 122. In this state, the front end 153a of the lever 153 may be pressed in the first direction.

Referring to FIG. 9, as the lever 153 is rotated around the hinge pin 152 in the first direction, the elastic wire 155 may be moved toward the first and second support protrusions 121, 122.

Referring to FIG. 10, the front end 155a of the elastic wire 155 may be inserted between the first and second support protrusions 121, 122, and the first and second coupling portions 165a, 165b of the elastic wire 155 may be elastically in close contact with the pillar portions of the first and second support protrusions 121, 122, respectively.

In this case, the movement of the supporter 130 in direction C opposite to direction B may be limited by the lever unit 150. Accordingly, the supporter 130 may be reliably mounted on the base 110.

Referring to FIG. 11, in the case where both lateral surfaces of the lever 153 overlap the pair of second ribs 151b as the lever 153 is rotated in the first direction, the pair of lock protrusions 154a provided at the pair of second ribs 151b may be snap-fitted in the pair of lock holes 145b provided on both lateral surfaces of the lever 153. The lever 153 may be reliably coupled to the bracket 151 and remain locked.

The supporter 130 may be mounted on the base 110 based on the first to third mounting steps described above.

On the contrary, in the case where the supporter 130 is separated from the base 110, the above-described first to third mounting steps may proceed in reverse order. For example, the lever 153 is rotated in the second direction to unlock a lock between the pair of lock protrusions 154a and the pair of lock holes 154b, and the elastic wire 155 is spaced from the first and second support protrusions 121, 122.

The supporter 130 is slid along the upper surface 110d of the base 110 in direction C (see FIG. 10). In this state, the supporter 130 is pulled in the Z-axis direction and spaced from the upper surface 110d of the base 110. As described above, the supporter 130 may be easily and rapidly separated from the base 110, based on a simple operation.

In the disclosure, the first, second, third and fourth connection protrusions 111, 112, 113, 114 are provided on the base 110, while the first, second, third and fourth connection holes 131, 132, 133, 134 corresponding to the first, second, third and fourth connection protrusions 111, 112, 113, 114 respectively are provided in the lower portion 130b of the supporter 130, but not limited thereto. For example, the first, second, third and fourth connection protrusions 111, 112, 113, 114 may be provided in the lower portion 130b of the supporter 130, while the first, second, third and fourth connection holes 131, 132, 133, 134 may be provided on the base 110. In this case, the first, second, third and fourth connection protrusions 111, 112, 113, 114 may be provided on the lower surface of the lower portion 130b of the supporter 130 to face the upper surface 110d (see FIG. 2) of the base 110.

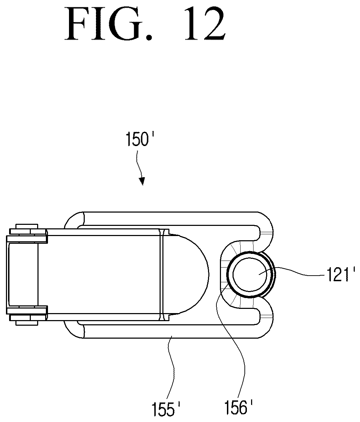

FIG. 12 is a diagram illustrating a lever unit according to various embodiments.

The elastic wire 155 of the lever unit 150 illustrated in FIG. 10, which includes two coupling portions 164a, 164b that can be in close contact with the pair of support protrusions 121, 122 respectively in the state where the two coupling portions 164a, 164b are pressed against the pair of support protrusions 121, 122, is described, but not limited thereto. For example, as illustrated in FIG. 12, an elastic wire 155' of a lever unit 150' may be provided, at the front end thereof, with one coupling portion 156'. In this case, the base 110 may be provided with one support protrusion 121' that can be closely contacted by the one coupling portion 156' in the state where the one coupling portion 156' is pressed against the one support protrusion 121'.

According to various embodiments, the base 110 and the supporter 130 of the stand 100 for a display may be coupled and separated easily and rapidly without using a separate fastener (a bolt, a screw and the like) and fasting tool, securing ease of use when the stand 100 for a display is used.

While various example embodiments of the disclosure are illustrated and described above, embodiments of the disclosure are not limited to the example embodiments set forth herein, and certainly, various modifications thereof may be made by those skilled in the art to which the disclosure pertains, without departing from the scope of the disclosure, including the claims and their equivalents, and should not be understood as separating from the technical spirit of the disclosure.

## Claims

1. A stand configured to support a display comprising:
a base comprising a plurality of connection protrusions;
a mounting portion connected to the display, and a support having a plurality of connection holes configured to respectively receive the plurality of connection protrusions is in a separable manner; and
a lever unit provided at the support and elastically fixed to the base.

2. The stand as claimed in claim **1,**
the plurality of connection protrusions respectively comprising:
a pillar portion protruding from an upper surface of the base; and
a head portion disposed at an upper end of the pillar portion and having a diameter greater than a diameter of the pillar portion,
the plurality of connection holes respectively comprising:
a first region having a width greater than a diameter of a head portion of the connection protrusion; and
a second region having a width less than a diameter of a head portion of the connection protrusion and greater than or equal to a diameter of a pillar portion of the connection protrusion.

3. The stand as claimed in claim 2,
wherein the plurality of connection holes are all disposed along a same direction.

4. The stand as claimed in claim **1,**
wherein the base includes at least one support protrusion,
the lever unit comprising:
a bracket configured to be fixed to the base;
a lever having a rear end configured to be hinge-connected to the bracket; and
an elastic wire having a rear end configured to be hinge-connected to the lever, while a front end is in contact with the at least one support protrusion in a state where the front end is pressed against the at least one support protrusion.

5. The stand as claimed in claim 4,
wherein the elastic wire has a loop shape surrounding a front end of the lever at a distance.

6. The stand as claimed in claim 5,
wherein the elastic wire includes, at a front end, at least one concave coupling portion configured to surround part of the at least one support protrusion.

7. The stand as claimed in claim 4, wherein
the at least one support protrusion comprises:
a pillar portion protruding from an upper surface of the base; and
a head portion disposed at an upper end of the pillar portion and having a diameter greater than a diameter of the pillar portion,
at least one additional connection hole provided at the support and comprising:
a third region having a width greater than a diameter of a head portion of the support protrusion; and
a fourth region having a width less than a diameter of a head portion of the support protrusion and greater than or equal to a diameter of a pillar portion of the support protrusion.

8. The stand as claimed in claim 4,
wherein the bracket includes at least one lock protrusion, and
the lever includes at least one lock hole separably coupled to the at least one lock protrusion.

9. The stand as claimed in claim 1,
wherein the support is inclined such that the mounting portion is placed toward a front of the base, and
a mounting region in which a lower portion of the support is mounted is placed at a rear of the base.

10. The stand as claimed in claim 1,
wherein the plurality of connection protrusions includes a bolt separably fastened to the base.

11. The stand as claimed in claim 7,
wherein the at least one support protrusion includes a bolt separably fastened to the base.

12. The stand as claimed in claim 1,
the plurality of connection protrusions comprise:
a first connection protrusion and a second connection protrusion spaced from a rear end of the base; and
a third connection protrusion and a fourth connection protrusion adjacent to a rear end of the base and closer to the rear end of the base than the first connection protrusion and the second connection protrusion.

13. The stand as claimed in claim 1, wherein the lever unit is at a position surrounded by the first, second, third and fourth connection protrusions.

14. A stand configured to support a display comprising:
a base;
a support having a lower portion separably mounted in a mounting region provided at the base while an upper portion is connected with the display; and
a lever unit including a lever configured to be rotated in a first direction and a second direction opposite to the first direction, and an elastic wire hinge-connected to the lever,
wherein based on the lever being rotated in the first direction a front end of the elastic wire is pressed against part of the base elastically and is configured to fix the support to the base, and
based on lever being rotated in the second direction a front end of the elastic wire is spaced from part of the base.

15. The stand as claimed in claim 11,
wherein the base includes a plurality of connection protrusions in a mounting region of the base, and
the support includes a plurality of connection holes into which the plurality of connection protrusions are respectively configured to be separable inserted.
